# EUROPEAN PATENT APPLICATION

(11) **EP 3 687 014 A1**
(43) Date of publication of application: **29.07.2020**
(21) Application number: 20153456.7
(22) Date of filing: 23.01.2020
(51) Int. Cl.: H02G 3/04, F16L 11/11, F16L 11/20, H02G 9/06

(54) **FLEXIBLE TUBE, PARTICULARLY FOR CABLE PROTECTION**

(30) Priority: 28.01.2019 IT 201900001199
(71) Applicant: GEWISS S.p.A., 24069 Cenate Sotto (Bergamo) (IT)
(72) Inventor: Domenico, BOSATELLI, 24069 Cenate Sotto (Bergamo) (IT)
(74) Representative: Forattini, Amelia

(57) **Abstract**

A flexible tube, particularly for cable protection, including an internal core coated by an external sheath; the core is made of PVC (polyvinyl chloride) or PP (polypropylene) and the sheath is made of EVA (ethylene vinyl acetate); the sheath is at least partially fused in the external surface part of the core.

## Description

The present invention relates to a flexible tube, particularly for cable protection.

The flexible tube according to the present invention is designed particularly for use in floors made with self-leveling concrete.

Flexible corrugated tubes are known which are used to protect, gather and guide conducting wires for the underfloor laying or for the insertion in adapted chases formed in walls, in false ceilings or in panels.

Corrugated tubes are lightweight and easy to bend and at the same time are resistant to compressions and impacts like heavier rigid tubes, thus allowing a safe and low-cost installation.

Traditional corrugated tubes are made of insulating material, generally PVC, PP, PE, in various diameters and with different colors in order to easily identify the circuits inside them.

Conventional corrugated tubes are extruded so as to obtain a corrugated profile constituted by rings that repeat longitudinally and regularly along the tube. These tubes must have certain mechanical characteristics and the requirements of the protective tubes are contained in specific standards of the electrical engineering.

Conventional corrugated tubes have a significant drawback when they are installed in a floor made of self-leveling liquid concrete.

Generally, a tube made of PVC is used. However, PVC has a drawback: during the extrusion process, microscopic impurities and the extrusion system produce micro-perforations on the outer wall of the tube.

When using a coextruded tube made of PVC, liquid concrete may flow into the tube, and this makes it very difficult or impossible to subsequently insert the electrical cables in the tube.

In order to solve this problem, some manufacturers make tubes constituted by two different materials: an internal core made of rigid PVC, which ensures adequate structural strength, and an external cladding, i.e., a protective film adapted to keep the annular surface intact, without micro-perforations. The film must be able to withstand impacts, trampling and other types of stress, especially at low temperatures.

Manufacturers currently use two completely different materials for manufacturing the composite tube, for example PVC for the internal core and polypropylene for the film, so as to prevent the materials from melting into each other during extrusion.

However, since the materials have extrusion temperatures with a difference of over 50°C, overheating occurs on the PVC structure, making it more fragile. The extrusion temperature of PVC is 180°C, while the extrusion temperature of PP is 230°C.

Another drawback of composite tubes of the prior art is observed when they undergo thermal expansion; the two components of the tube, the core and the film, in fact tend to separate, because the two different materials have different linear expansion coefficients.

EP3107164A1 discloses a flexible tube, for protecting cables, comprising a corrugated inner core covered by an outer sheath; the core and the sheath are made of materials having the same polymeric base. The two materials have extrusion temperatures that are different but do not exceed 20°C, thus preventing overheating in the extrusion step.

The aim of the present invention is to provide a flexible tube of the composite type that overcomes the drawbacks of the cited prior art.

Within the scope of this aim, an object of the invention is to provide a flexible tube that ensures an optimum mechanical performance even at low temperatures, below -5°C.

A further object of the invention is to provide a flexible tube that has no micro-perforations and is therefore suitable for use in floors made by self-leveling liquid concrete.

A further object of the invention is to provide a flexible tube which, when subjected to thermal expansion, prevents the linear displacement between its two components.

A further object of the invention is to provide a flexible tube which, by virtue of its particular constructive characteristics, is capable of giving the greatest assurances of reliability and safety in use.

This aim and these and other objects which will become better apparent hereinafter are achieved by a flexible tube, particularly for cable protection, comprising an internal core coated by an external sheath; said core having an external superficial part; said tube being characterized in that said core is made of PVC (polyvinyl chloride) or PP (polypropylene) and said sheath is made of EVA (ethylene vinyl acetate); said sheath being at least partially fused in said external superficial part of said core.

Further characteristics and advantages will become better apparent from the description of preferred but not exclusive embodiments of the invention, illustrated by way of non-limiting example in the accompanying drawings, wherein:

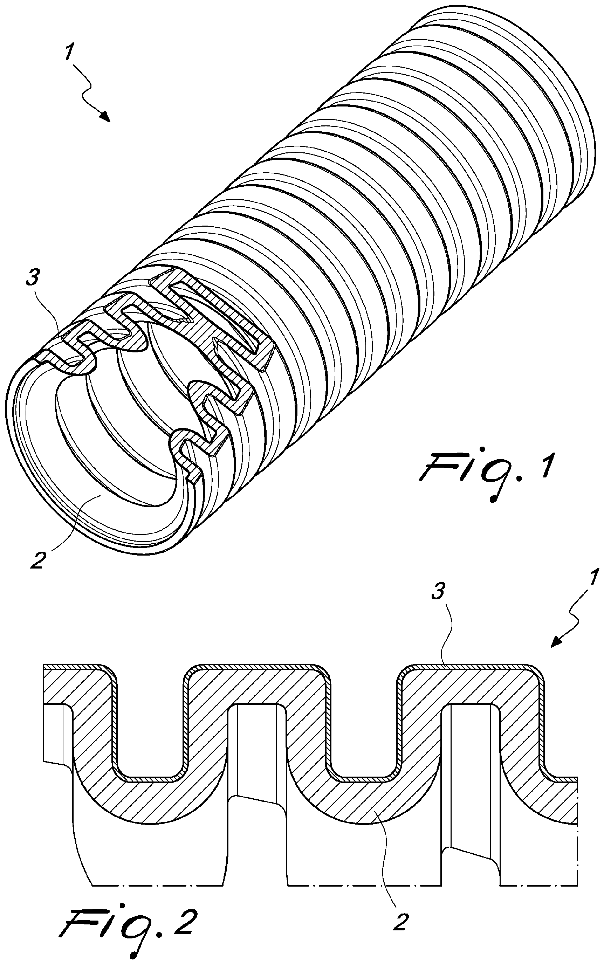

Figure 1 is a perspective view of a portion of flexible corrugated tube according to the present invention;
Figure 2 is a longitudinal sectional view of a portion of the wall of the tube according to the present invention.

With reference to the cited figures, the tube according to the invention, globally designated with the reference numeral 1, includes a core 2 and a sheath 3.

The core 2 is advantageously corrugated and manufactured so as to ensure all the characteristics required by the standards and regulations.

The external sheath 3 has the purpose of sealing the tube so that the liquid concrete does not penetrate inside it.

Advantageously, the internal surface of the core 2 is lubricated in order to facilitate the sliding of the electric cables.

According to the invention, the core 2 is made of PVC (polyvinyl chloride) or PP (polypropylene) while the sheath 3 is made of EVA (ethylene vinyl acetate).

Since the polymeric base is the same, the two materials, PVC/PP and EVA, couple thermally within each other, having extrusion temperatures that are different but contained within 20°C, and without generating over heating of one of the two materials.

Upon extrusion, the sheath 3 is deposited on the core 2, melting the external surface of the latter, mixing in a transition region between the core and the sheath, ceiling any micro perforations.

In practice, the sheath is at least partially fused in the external surface part of the core.

Another advantage is appreciated when the tube is subjected to thermal expansion: the sheath and the core in fact do not separate, because the expansion coefficients of the two component materials are similar.

Essentially, the tube according to the present invention is a corrugated tube, used for electrical cable protection, which is constituted by a flexible tube of the composite type, which, when subjected to thermal expansion, does not have linear displacements between the two components.

The tube according to the present invention has a double corrugation, an internal one and an external one, and is formed by two layers which are perfectly mutually welded.

In other words, the core and the sheath are mutually welded without being completely fused into each other and without discontinuity between the connection of the core to the sheath.

According to a first aspect of the invention, the internal core 2 is made of PVC (polyvinyl chloride) and the external sheath 3 is made of EVA (ethylene vinyl acetate).

PVC has a high polarity and a high compatibility with a variety of other high-performance plastic materials and it can be mixed easily in order to form polymeric alloys.

With polymer mixing techniques it is possible to modify some shortcomings of rigid PVC products.

According to the present invention, the internal core 2 made of PVC is protected with a sheath made of EVA.

The external sheath made of EVA, which has rubber-like properties and is partially fused within the core, improves the impact strength of the PVC core when the tube is subjected to an impact, since the EVA absorbs the energy of the impact and prevents damage to the PVC core.

Furthermore, the EVA has the function of a macromolecular plasticizer and converts the PVC from a rigid plastic material to a semi-flexible material.

The use of the EVA sheath allows to produce a flexible and tough tube, reducing the use of plasticizers.

According to a further aspect of the invention, the internal core 2 is made of PP (polypropylene) and the external sheath is made of EVA.

PP is one of the most widely used polymers in many industrial applications.

However, the applications of PP are often limited due to the low impact strength of this material, in particular at low temperatures.

The mixing of PP with various polymers is a low-cost and effective way to avoid the above mentioned drawbacks.

According to the present invention, the internal core made of PP is protected by an external sheath made of EVA.

EVA, which can have different vinyl acetate contents (8 to 40% by weight), improves the low impact strength of the internal core made of PP.

PP/EVA mixtures are thermally immiscible but there is a co-continuous phase in the mixtures with an EVA content of 50% by weight or more.

This phase represents the bonding portion between the core 2 and the sheath 3.

In both configurations, the use of EVA provides various advantages in terms of resistance and functionality to the tube, both with the core made of PVC and with the core made of PP.

The EVA sheath allows to use the tube even at low temperatures, beyond -5°C.

The EVA sheath gives the tube greater softness and flexibility with respect to a product made only of PVC or PP.

The EVA sheath gives the tube a resistance to various agents, such as seawater, oil, acids.

The tube according to the invention is not toxic and is suitable for use in an environment in contact with food material.

In practice it has been found that the invention achieves the intended aim and objects, providing a flexible tube, particularly studied for use in floors provided by using self-leveling liquid concrete, which ensures the total absence of micro perforations and at the same time ensures a higher performance at low temperatures, below -5°C.

## Claims

1. A flexible tube, particularly for cable protection, comprising an internal core coated by an external sheath; said core having an external superficial part; said tube being **characterized in that** said core is made of PVC (polyvinyl chloride) or PP (polypropylene) and said sheath is made of EVA (ethylene vinyl acetate); said sheath being at least partially fused in said external superficial part of said core.

2. The flexible tube according to claim 1, **characterized in that** said core is corrugated; said sheath adhering to the entire external surface of said core.
